## Europäisches Patentamt

## European Patent Office

## Office européen des brevets

(11) Veröffentlichungsnummer: **0 168 590**
**B1**

(12) # EUROPÄISCHE PATENTSCHRIFT

(45) Veröffentlichungstag der Patentschrift:
03.05.89

(51) Int. Cl.⁴: **B 01 D 50/00, B 01 D 46/02**

(21) Anmeldenummer: **85106124.2**

(22) Anmeldetag: **18.05.85**

(54) **Entstaubungseinrichtung.**

(30) Priorität: **14.06.84 DE 3422093**

(43) Veröffentlichungstag der Anmeldung:
**22.01.86 Patentblatt 86/4**

(45) Bekanntmachung des Hinweises auf die Patenterteilung:
**03.05.89 Patentblatt 89/18**

(84) Benannte Vertragsstaaten:
**AT FR GB IT SE**

(56) Entgegenhaltungen:
**EP-A- 0 024 450**
**EP-A- 0 102 417**

(73) Patentinhaber: **MANNESMANN Aktiengesellschaft,
Mannesmannufer 2 Postfach 5501,
D-4000 Düsseldorf 1 (DE)**

(72) Erfinder: **Bollerhey, Rolf, Ing. (grad), Michelsheide 11,
D-4152 Kempen 3 (DE)**

(74) Vertreter: **Meissner, Peter E., Dipl.-Ing. et al, Meissner &
Meissner Patentanwälte Herbertstrasse 22,
D-1000 Berlin 33 Grunewald (DE)**

## Beschreibung

Die Erfindung betrifft eine Entstaubungseinrichtung mit einem Staubvorabscheider, gemäss dem Oberbegriff des Patentanspruchs 1.

Derartige Entstaubungseinrichtungen gehören der Gattung der mit einem Staubvorabscheider kombinierten Filterbehälter an, die in Parallelschaltung betrieben werden. Von mehreren Filterbehältern kann bei Parallelschaltung zumindest einer immer im Gegenstrom mit Spülgas gereinigt werden, während in diesem Zeitabschnitt die anderen Filterbehälter sich im Normalbetrieb befinden. Zusätzlich zum Prinzip der Parallelschaltung ist erforderlich, den Staub aus den Filterbehältern möglichst nicht über längere Strecken zu transportieren. Insbesondere horizontale Förderstrecken verursachen Verklumpen und Zusammenbakken des Staubes.

Aus der EP-A 102 417 ist eine aus mehreren Filterbehältern bestehende Entstaubungseinrichtung bekannt, bei der die Filterbehälter einzeln mittels Saugzugs über eine gemeinsame, sämtliche Filterbehälter im Bodenbereich übergreifende, gleichzeitig als Staubsammelgefäss dienende Einrichtung verbunden und zu reinigen sind. Hierbei muss die Austragseinrichtung bei Reinigung der einzelnen Filterbehälter in die jeweilige Reinigungsstellung gedreht werden und dabei ergeben sich infolge der herrschenden hohen Gastemperaturen Abdichtungsprobleme. Weitere Probleme ergeben sich durch die gemeinsame Sammlung von grobem und feinem Staub hinsichtlich des Wiedereinsatzes in den Prozess, weil durch die Verunreinigung insbesondere des feinen Staubes eine Anreicherung schädlicher Begleitelemente möglich ist.

Es ist ausserdem bekannt (EP-A 24 450), mehrere Filterbehälter am Eingang mittels getrennter Rohgasrohre unmittelbar an den Staubvorabscheider anzuschliessen und die Filterbehälter am Ausgang mittels ebenfalls jeweils getrennter Reingasrohre unmittelbar an eine Reingassammelleitung anzuschliessen, wobei sowohl am Eingang als auch am Ausgang jedem Filterbehälter Absperrventile zugeordnet sind und wobei von den Filterbehältern jeweils getrennte Staubabzugsrohre in den Staubvorabscheider münden. Der bekannte Gegenstand löst damit die Aufgabe, eine platzsparende Zuordnung der Filterbehälter zu dem Staubvorabscheider bei einfacherer Abdichtung gegen die Atmosphäre zu schaffen und gleichzeitig die Wartungseigenschaften der Filterbehälter zu verbessern.

Eine solche platzsparende Anordnung der Filterbehälter rund um den Staubvorabscheider erspart zwar ausserdem eine doppelte Abdichtung am Ausgang der Filterbehälter, jedoch hat sich die Verteilung des vorentstaubten Rohgases auf die einzelnen Filterbehälter als verbesserungsfähig erwiesen, und es hat sich gezeigt, dass die Anzahl der dem Verschleiss unterworfenen Absperrventile noch gesenkt werden sollte.

Der Erfindung liegt deshalb die Aufgabe zugrunde, bei verbesserten Anströmungsverhältnissen der Filterbehälter und unter Vermeidung der vorstehenden Nachteile die Anzahl der notwendigen Absperrventile zu senken.

Die gestellte Aufgabe wird erfindungsgemäss mit den Merkmalen des Kennzeichens des Patentanspruchs 1 gelöst. Die Erfindung vereinigt die Vorteile der bekannten Lösung mit der Ersparnis eines sehr aufwendigen Absperrventils pro Filterbehälter (das früher oben am Filtereingang angeordnet war). Ausserdem wird die Anströmung der Filterelemente optimal erreicht, was zu einer Erhöhung der Lebensdauer beiträgt. Der Staubvorabscheider kann daneben als Verdunstungskühler benutzt werden und spart dadurch Platz und Kosten für einen besonderen Verdunstungskühler.

Die angestrebte optimale Anströmung der einzelnen Filterbehälter von unten wird dadurch erreicht, dass die Filterbehälter jeweils mit einem etwa trichterförmigen Übergang zwischen Filtergehäuse und Staubsack des Staubvorabscheiders versehen sind. Die Strömung des Rohgases wird durch die Trichterform optimal verteilt, womit eine Geschwindigkeitssenkung verbunden ist, die sich vorteilhaft auf die Staubfilterung auswirkt.

Der Vorteil der Zweiwegklappe ist eine individuelle Abreinigung jedes einzelnen Filterbehälters und dazu steht ein separater Staubaustrag des abgereinigten Filterbehälters zur Verfügung. Das Rohgas erfährt hierbei nämlich nicht noch eine Staubanreicherung durch den Abreinigungsstaub eines ausgewählten, auf Entstaubung geschalteten Filterbehälters.

Eine Steigerung der Verwendbarkeit der Erfindung wird dadurch erreicht, dass sämtliche Staubabzüge der Filterbehälter an eine Ringleitung angeschlossen sind.

Der Vorteil ist ein automatisierter Staubaustrag, der in das Steuerungs- bzw. Regelungssystem der Anlage mit einbezogen werden kann.

Der vorstehende Gedanke kann dahingehend verwirklicht werden, indem die Ringleitung zu einer pneumatischen Staubfördereinrichtung ausgebildet ist.

Die Abreinigung eines ausgewählten Filterbehälters erfolgt nach dem Reingas-Abreinigungs-Prinzip, wobei jedem Filterbehälter am oberen Austritt zur Reingassammelleitung eine Zuleitung für Spülgas zugeordnet ist.

Die Entstaubungseinrichtung kann kompakt und wirtschaftlich hergestellt werden, indem der Staubvorabscheider ein zentrales Standrohr bildet, an dem die Filterbehälter abgestützt bzw. befestigt sind.

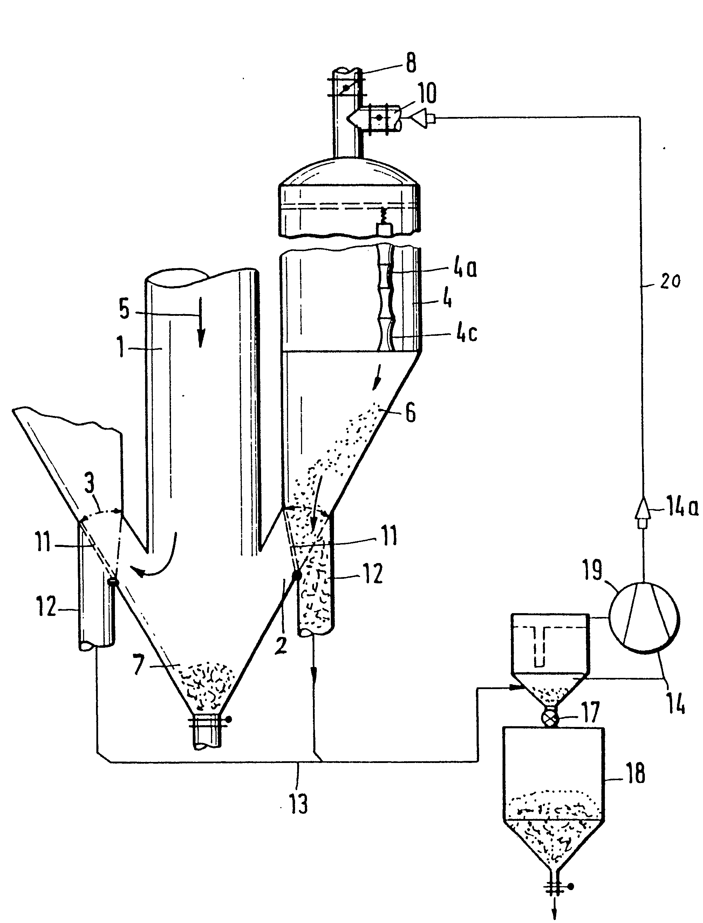

In der Zeichnung ist ein Ausführungsbeispiel der Erfindung in einer Figur schematisch dargestellt und wird im folgenden näher erläutert. Die Figur zeigt einen senkrechten Schnitt durch die Entstaubungseinrichtung mit einer Zusatzeinrichtung für den Staubtransport.

Die Entstaubungseinrichtung weist einen Staubvorabscheider 1 auf, um den sich im Ausführungsbeispiel sechs Filterbehälter 4 gruppieren. In den Filterbehältern befinden sich jeweils Filterelemente 4a, die z.B. aus an Federn aufgehängten Filterschläuchen bestehen. Jeder Filterbehälter 4 ist an seinem Ausgang 2 mit dem Staubsack 7 verbunden. Das Rohgas 5 tritt von oben in den Staubabscheider 7 ein und wird durch Umlenkung vorentstaubt. Der abgeschiedene Grobstaub sammelt sich im Staubsack 7.

Am Ausgang jedes Filterbehälters 4 ist ein Rohgasrohrstutzen 3 vorgesehen. An die Rohgasrohrstutzen 3 schliessen sich jeweils trichterförmige Übergänge 6 an. Das Rohgas 5 wird demzufolge nach der Grobentstaubung vom Staubvorabscheider 1 nach oben umgelenkt und durchströmt den Rohgasrohrstutzen 3, verteilt sich anschliessend jeweils in den Übergängen 6 auf den vollen Querschnitt des Filterbehälters 4, wird in den Filterelementen 4a feinentstaubt, wobei der feine Staub in den Filterelementen 4a zurückbleibt. Das Reingas strömt in die Reingassammelleitung 8 und der weiteren Verwertung zu.

Zwischen dem Staubvorabscheider 1 und dem trichterförmigen Übergang 6 ist innerhalb des Rohgasstutzens 3 eine Zweiwegklappe 11 angeordnet. Die linke Hälfte der Darstellung zeigt die Zweiwegklappe 11 offen, so dass das Rohgas 5 strömt und in dem Filterbehälter 4 entstaubt wird. Die rechte Hälfte der Darstellung zeigt die Zweiwegklappe 11 geschlossen. Der Filter 4 mit den Filterelementen 4a, deren Filterschlauchoberflächen 4c während des Abreinigens durch Spülen mit Reingas nach innen gedrückt werden, wird innen vom Feinstaub befreit. Hinter der Zweiwegklappe 11, bezogen auf die Strömung des Rohgases 5 bzw. vor der Zweiwegklappe 11, bezogen auf die Abreinigungsströmung, ist an jedem Filterbehälter 4 ein Staubzug 12 abgeleitet, wobei sämtliche Staubabzüge 12 an eine Ringleitung 13 angeschlossen sind. Die Ringleitung 13 ist an die pneumatisch wirkende Staubfördereinrichtung 14 angeschlossen, so dass der abgeschiedene Feinstaub wiederum durch eine Schleuse 17 in einen Bunker 18 abgefördert werden kann. Das entstaubte Gas 14a kann durch das Gebläse 19 und durch die Rückleitung 20 wieder als Spülgas 10 in die Reingassammelleitung 8 zurückgeleitet werden.

Die Entstaubungseinrichtung eignet sich vorteilhafterweise auch für explosive Gase und besonders hohe Gasdrücke, wie diese z.B. an Hochöfen auftreten.

## Patentansprüche

1. Entstaubungseinrichtung mit einem Staubvorabscheider, dem im Trockenverfahren betriebene Filterbehälter mit Filterelementen nachgeordnet sind, die am Ausgang mit dem Staubsack des Staubvorabscheiders verbunden sind, wobei mittels eines Spülgasgebläses jeder Filterbehälter einzeln auf Abreinigung bei relativ höherem Spülgasdruck gegenüber dem Rohgasdruck schaltbar und das Reingas an einem oberen Austritt der Filterbehälter ableitbar ist, dadurch gekennzeichnet, dass im Staubvorabscheider (1) das staubbeladene Rohgas (5) im Bereich des Staubsackes (7) in die einzelnen, unmittelbar angeschlossenen Filterbehälter (4) nach oben umlenkbar ist, dass die Filterbehälter (4) jeweils mit einem etwa trichterförmigen Übergang (6) zwischen Filtergehäuse (4) und Staubsack (7) des Staubvorabscheiders (1) versehen sind, dass zwischen Staubvorabscheider (1) und dem trichterförmigen Übergang (6) eine Zweiwegklappe (11) und in Strömungsrichtung für den Abreinigungsvorgang vor der Zweiwegklappe (11) ein Staubabzug (12) angeordnet ist.

2. Entstaubungseinrichtung nach Anspruch 1, dadurch gekennzeichnet, dass sämtliche Staubabzüge (12) der Filterbehälter (4) an eine Ringleitung (13) angeschlossen sind.

3. Entstaubungseinrichtung nach Anspruch 2, dadurch gekennzeichnet, dass die Ringleitung (13) zu einer pneumatischen Staubfördereinrichtung (14) ausgebildet ist.

4. Entstaubungseinrichtung nach den Ansprüchen 1 bis 3, dadurch gekennzeichnet, dass jedem Filterbehälter (4) am oberen Austritt zur Reingassammelleitung (8) eine Zuleitung für Spülgas (10) zugeordnet ist.

5. Entstaubungseinrichtung nach den Ansprüchen 1 bis 4, dadurch gekennzeichnet, dass der Staubvorabscheider (1) ein zentrales Standrohr bildet, an dem die Filterbehälter (4) abgestützt bzw. befestigt sind.

## Revendications

1. Dispositif de dépoussiérage comportant un pré-dépoussiéreur, en aval duquel sont disposés des récipients de filtration, fonctionnant selon un procédé à sec, avec des éléments filtrants, qui sont reliés à la sortie avec le sac de poussière du pré-dépoussiéreur, chaque récipient de filtration pouvant être individuellement dépoussiéré à l'aide d'un ventilateur de gaz de lavage pour une pression de gaz de lavage relativement élevée par rapport à la pression de gaz brut et le gaz purifié pouvant être amené à une sortie supérieure du récipient de filtration, caractérisé en ce que, dans le pré-dépoussiéreur (1), le gaz brut chargé de poussière (5) peut être dévié dans la zone du sac de poussière (7) vers le haut dans les récipients de filtration individuels (4) directement adjacents, en ce que les récipients de filtration (4) comportent à chaque fois une jonction à peu près en forme d'entonnoir (6) entre le carter de filtration (4) et le sac de poussière (7) du pré-dépoussiéreur (1), en ce que, entre le pré-dépoussiéreur (1) et la jonction en forme d'entonnoir (6), sont prévus un clapet à deux voies (11) et une aspiration de poussière (12) avant le clapet à deux voies (11) dans la direction d'écoulement pour le processus de dépoussiérage.

2. Dispositif de dépoussiérage selon la revendication 1, caractérisé en ce que toutes les aspirations de poussière (12) des récipients de filtration (4) sont reliées à une conduite annulaire (13).

3. Dispositif de dépoussiérage selon la revendication 2, caractérisé en ce que la conduite annulaire (13) est reliée à un dispositif d'amenée de poussière pneumatique (14).

4. Dispositif de dépoussiérage selon les revendications 1 à 3, caractérisé en ce que, à chaque récipient de filtration (4) à la sortie supérieure vers la conduite de collecte de gaz purifié (8), est associée une conduite d'amenée pour le gaz de lavage (10).

5. Dispositif de dépoussiérage selon les revendications 1 à 4, caractérisé en ce que le pré-dépoussiéreur (1) forme un tube vertical central auquel sont fixés ou s'appuient les récipients de filtration (4).

## Claims

1. A dust extraction device comprising a preliminary dust separator which is connected at its output to filter containers which are operated in a dry process, which comprise filter elements and which are connected at their output to the dust collector of the preliminary dust separator, whereby means of a flushing gas blower, each filter container can be connected individually for cleaning at a relatively higher flushing gas pressure than the raw gas pressure, and where the pure gas can be discharged at an upper outlet of the filter container, characterised in that in the preliminary dust separator (1) the dust-laden raw gas (5) can be guided upwards in the region of the dust collector (7) into the individual, directly connected filter containers (4), that the filter containers (4) are each provided with an approximately funnel-shaped junction (6) between the filter housing (4) and the dust collector (7) of the preliminary dust separator (1), and that a two-way valve (11) is arranged between the preliminary dust separator (1) and the funnel-shaped junction (6) and a dust outlet (12) is arranged upstream of the two-way valve (11) in the flow direction of the cleaning process.

2. A dust extraction device as claimed in Claim 1, characterised in that all the dust outlets (12) of the filter containers (4) are connected to a ring line (13).

3. A dust extraction device as claimed in Claim 2, characterised in that the ring line (13) forms a pneumatic dust conveyor device (14).

4. A dust extraction device as claimed in Claims 1 to 3, characterised in that at the upper outlet to the pure gas collector pipeline (8) each filter container (4) is assigned a supply pipeline for flushing gas (10).

5. A dust extraction device as claimed in Claims 1 to 4, characterised in that the preliminary dust separator (1) forms a central standpipe by which the filter containers (4) are supported or to which the filter containers (4) are attached.